# EUROPÄISCHE PATENTSCHRIFT

(11) **EP 3 383 312 B1**
(45) Veröffentlichungstag und Bekanntmachung des Hinweises auf die Patenterteilung: **12.02.2020**
(21) Anmeldenummer: 16805410.4
(22) Anmeldetag: 01.12.2016
(51) Int. Cl.: A61C 13/00, A61C 13/107

(54) **VERFAHREN ZUR ANPASSUNG VON PROTHESENZÄHNEN**
METHOD FOR ADJUSTING PROSTHETIC TEETH
PROCÉDÉ POUR L'AJUSTEMENT DE DENTS PROTHÉTIQUES

(30) Priorität: 04.12.2015 DE 102015121180
(43) Veröffentlichungstag der Anmeldung: 10.10.2018
(73) Patentinhaber: Kulzer GmbH, 63450 Hanau (DE)
(72) Erfinder: BÖHM, Uwe, 61350 Bad Homburg (DE); WOLDEGERGIS, Yohannes, 63457 Hanau (DE)
(74) Vertreter: Schultheiss & Sterzel Patentanwälte PartG mbB
(86) Internationale Anmeldenummer: PCT/EP2016/079493
(87) Internationale Veröffentlichungsnummer: WO 2017/093432

(56) Entgegenhaltungen:
- WO-A1-2013/124452
- WO-A1-2015/155283

## Beschreibung

Die Erfindung betrifft ein Verfahren zum Herstellen einer Dentalprothese.

Die Erfindung betrifft somit die Herstellung einer Dentalprothese sowie die Bearbeitung von konfektionierten Prothesenzähnen oder die Herstellung von Prothesenzähnen für partielle und totale Dental-Kunststoffprothesen, die maschinell im CAM-Verfahren (CAM - Computer-Aided Manufacturing, Deutsch: rechner-unterstützte Fertigung) produziert werden und die computergestützt mit CAD-Verfahren (CAD - Computer-Aided Design, Deutsch: rechnerunterstützte Konstruktion) konstruiert werden. Die Kombination solcher Verfahren wird als CAD/CAM-Verfahren bezeichnet, bei der sowohl die Konstruktion als auch die Fertigung rechnergestützt erfolgt. Die Prothesenzähne können als Halbzeug zur teilweisen oder vollständigen Herstellung von Dental-Kunststoffprothesen mit CAM-Verfahren bereitgestellt werden oder vollständig generativ hergestellt werden (beispielsweise gedruckt werden).

Der derzeit gängige Weg ist die analoge Positionierung von Prothesenzähnen zur Herstellung von Dentalprothesen, bei dem zunächst ein Abdruck des zahnlosen Kiefers des Patienten genommen wird. Aus diesem Abdruck wird ein Gipsmodell der Patientensituation gefertigt. Anschließend wird ein Funktionsmodell der Dentalprothese aus Wachs auf dem Gipsmodell aufgebaut und mit Prothesenzähnen bestückt. Diese Wachsprothese geht zum Zahnarzt, um eine Anprobe am Patienten durchzuführen, bei der die Stellungen der künstlichen Prothesenzähne korrigiert werden können. Diese korrigierte Aufstellung geht dann zurück an das Labor, das dann die Wachsbasis entfernt und die Aufstellung der künstlichen Zähne in eine finale Basis aus Kunststoff überführt. Dazu wird eine Hohlform oder Gießform aus diesen beiden Teilen aufgebaut, in der die Prothesenzähne bereits integriert sind. Dadurch sind die Prothesenzähne bereits in die Hohlform eingesetzt und damit positioniert. Die Form wird mit einem zahnfleischfarbenen Kunststoff ausgegossen und während des Gießprozesses werden die Prothesenzähne mit der Prothesenbasis verbunden. Nach Aushärtung des Kunststoffs wird dieser nachbearbeitet, um die gewünschte Form zu erhalten.

Fertige Prothesenbasen können auch aus einem härtenden Kunststoff mit einer Zwischenbasis aus Wachs hergestellt werden. Dabei wird nach der Anprobe und einer eventuellen Umstellung und/oder Bearbeitung der künstlichen Prothesenzähne ein Vorwall aus Silikon oder Gips erstellt, um die Position und Ausrichtung der künstlichen Prothesenzähne zu sichern. Danach entfernt man die Wachsbasis, der entstehende Hohlraum wird in der Regel mit Autopolymerisat aufgefüllt und die künstlichen Prothesenzähne damit auf der festen Prothesenbasis fixiert beziehungsweise einpolymerisiert. Die so hergestellte Dentalprothese wird beim Patienten im Rahmen eine Anprobe angepasst und dabei die okklusalen Seiten der Prothesenzähne bereichsweise abgeschliffen.

Das gesamte derartige Verfahren ist sehr zeit- und damit kostenintensiv und basiert auf einer großen Zahl handwerklicher Schritte. Im Zuge der Digitalisierung verlagert sich der Aufwand zur Herstellung, Aufstellung und Konstruktion der Prothesenbasen und der Prothesenzähne in das CAD-Modell und die eigentliche Herstellung wird von Maschinen (CAM-Maschinen) übernommen.

Bei der Aufstellung vorkonfektionierter Prothesenzähne werden diese der jeweiligen Mundsituation des Patienten vom Zahntechniker angepasst und beschliffen. Es gibt bereits erste Verfahren, wie beispielsweise die aus der DE 10 2009 056 752 A1 oder der WO 2013 124 452 A1 bekannten Verfahren, bei denen die Teil- beziehungsweise Totalprothese digital aufgestellt und über CAD/CAM-Verfahren produziert wird. Die Problematik der Verbindung und einer anschließenden Korrektur besteht jedoch in der herkömmlichen wie auch in der digitalen Vorgehensweise. Die WO 2015/155 283 A1 offenbart ein Verfahren zur Bearbeitung von vorkonfektionierten Prothesenzähnen, bei dem mehrere Prothesenzähne zu deren Bearbeitung in einer elastischen Form fixiert werden.

Ein CAD/CAM-Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Nachteilig ist bei bekannten Verfahren, dass die Prothesenzähne, wenn Sie mit der Prothesenbasis verbunden sind, bei der Anprobe okklusal mit einem spanabhebenden Verfahren geschliffen werden, um eine möglichst genaue Passung der Dentalprothesen im Mundraum des Patienten zu erreichen. Es erfolgt also häufig eine Korrektur der Aufstellung und der Länge der Zähne durch den Zahnarzt. Zusätzlich kann je nach Dentalprothese auch noch die Position und/oder die Orientierung der Prothesenzähne in der Prothesenbasis geändert werden. Im Fall von gedrucktem herausnehmbarem Zahnersatz ist dieses Problem noch nicht gelöst. Bei jeder okklusalen Bearbeitung und Einkürzung wird die okklusale Oberfläche der Prothesenzähne beeinträchtigt. So kann es zu ungewollten aufgerauten oder sogar kantigen Strukturen kommen und bei einem schichtweisen Aufbau der Prothesenzähne kann es zu einer Schwächung der obersten Schicht und damit der mechanischen Stabilität der Prothesenzähne kommen.

Die Aufgabe der Erfindung besteht also darin, die Nachteile des Stands der Technik zu überwinden. Insbesondere soll ein Verfahren und eine Dentalprothese bereitgestellt werden, bei dem keine Beeinträchtigung der okklusalen Seiten der Prothesenzähne erfolgt beziehungsweise vorhanden ist. Gleichzeitig sollen möglichst wenige Nachbearbeitungsschritte notwendig sein. Das Verfahren soll möglichst kostengünstig und schnell umsetzbar sein und die Dentalprothese möglichst kostengünstig herzustellen sein. Zudem soll die Nachbearbeitung der Prothesenzähne möglichst schnell und unaufwendig durchführbar sein. Des Weiteren sollen moderne computergesteuerte Herstellungsverfahren mit dem Verfahren umsetzbar sein und eine möglichst weitgehende Automatisierung erreicht werden. Bereits vorhandene Daten und Datenerfassungsvorrichtungen sollen mit dem erfindungsgemäßen Verfahren möglichst gewinnbringend genutzt werden, beziehungsweise es sollen möglichst wenige zusätzliche Geräte und Vorrichtungen zum Umsetzen des erfindungsgemäßen Verfahrens benötigt werden. Gleichzeitig soll aber die Genauigkeit, mit der sich bisherige Dentalprothesen herstellen und einpassen lassen, erhalten bleiben.

Die Aufgaben der Erfindung werden gelöst durch ein Verfahren zum Herstellen einer (endgültigen) Dentalprothese aufweisend die folgenden chronologischen Verfahrensschritte:
a) eine erste, provisorische Dentalprothese aufweisend zumindest eine erste Prothesenbasis und mehrere provisorische Prothesenzähne wird hergestellt, wobei Daten, die zumindest die 3-dimensionale Form der okklusalen Oberflächen der provisorischen Prothesenzähne der provisorischen Dentalprothese wiedergeben, als Datensatz A gespeichert werden oder bereits als Datensatz A gespeichert sind,
b) nach einer subtraktiven okklusalen Bearbeitung wenigstens eines der provisorischen Prothesenzähne werden zumindest die 3-dimensionalen okklusalen Oberflächen der bearbeiteten provisorischen Prothesenzähne der ersten Dentalprothese bestimmt oder die 3-dimensionale Oberfläche der ersten Dentalprothese wird als Ganzes bestimmt,
c) Daten, die zumindest die 3-dimensionale Form der okklusalen Oberflächen der bearbeiteten provisorischen Prothesenzähne wiedergeben, werden als Datensatz B gespeichert,
d) über einen rechnerischen Vergleich des Datensatzes B mit dem Datensatz A werden die Unterschiede der Formen der provisorischen Prothesenzähne vor und nach der subtraktiven okklusalen Bearbeitung berechnet und daraus zumindest gewünschte Längen für endgültige Prothesenzähne berechnet, und
e) endgültige Prothesenzähne werden zumindest mit der berechneten gewünschten Länge unter Anwendung eines CAM-Verfahrens aus virtuellen Modellen der endgültigen Prothesenzähne hergestellt, wobei die gewünschte Länge der endgültigen Prothesenzähne durch eine basale Kürzung der virtuellen Modelle der endgültigen Prothesenzähne eingestellt wird, und die derart hergestellten endgültigen Prothesenzähne werden mit der zumindest einen ersten Prothesenbasis oder zumindest einer zweiten Prothesenbasis fest verbunden.

Wenn im Folgenden davon die Rede ist, dass zumindest die 3-dimensionalen okklusalen Oberflächen der provisorischen Prothesenzähne gespeichert werden, ist das so zu verstehen, dass Daten, die zumindest die 3-dimensionale Form der okklusalen Oberflächen der provisorischen Prothesenzähne wiedergeben, gespeichert werden. Die Daten werden bevorzugt in digitaler Form gespeichert. Als Daten, die zumindest die 3-dimensionale Form der okklusalen Oberflächen der provisorischen Prothesenzähne wiedergeben, werden erfindungsgemäß auch solche Daten verstanden, die ein Raster, auch ein grobes Raster, über die 3-dimensionale Oberfläche der Prothesenzähne oder der ersten Dentalprothese legen. Die Daten können dann als kartesische Koordinaten (X-, Y- und Z-Koordinaten) gespeichert sein. Als Z-Koordinate wird dabei bevorzugt der Vektor gewählt, der sich von der basalen Seite zur okklusalen Seite des Prothesenzahns erstreckt (die Achse der Prothesenzähne). Es ist aber auch möglich, die Datensätze A und B mit Hilfe von Flächen-Funktionen zu speichern, die einen 3-dimensionalen Fit zumindest der Oberfläche jeweils eines provisorischen Prothesenzahns darstellen. Es ist ferner möglich mehrere Stereobilder direkt unkomprimiert oder komprimiert zu speichern und erst bei dem Vergleich der Datensätze A und B eine rechnerische Verarbeitung der Stereobilder durchzuführen. Weitere Möglichkeiten die Daten zu speichern, können von einem Fachmann, der sich mit digitaler Datenverarbeitung auskennt, gefunden werden.

Wenn zumindest die 3-dimensionalen okklusalen Oberflächen der bearbeiteten provisorischen Prothesenzähne der ersten Dentalprothese bestimmt werden, ist hiermit gemeint, dass zumindest die 3-dimensionalen okklusalen Oberflächen der bearbeiteten provisorischen Prothesenzähne der ersten Dentalprothese aufgenommen und in irgendeiner Form digitalisiert werden, so dass anschließend eine Auswertung der aufgenommenen 3-dimensionalen Form durchgeführt werden kann.

Die Länge der Prothesenzähne bezieht sich auf die Strecke beziehungsweise den Abstand zwischen dem okklusalen und basalen Ende der Prothesenzähne. Dies trifft sowohl für die provisorischen Prothesenzähne und die physischen endgültigen Prothesenzähne zu, als auch für die virtuellen Modelle der endgültigen Prothesenzähne.

Die zumindest eine erste Prothesenbasis ist erfindungsgemäß bevorzugt eine erste erste Prothesenbasis für den Oberkiefer und eine zweite erste Prothesenbasis für den Unterkiefer. Dementsprechend ist die zumindest eine zweite Prothesenbasis erfindungsgemäß bevorzugt eine erste zweite Prothesenbasis für den Oberkiefer und eine zweite zweite Prothesenbasis für den Unterkiefer. Besonders bevorzugt betrifft die vorliegende Erfindung nämlich Verfahren zur Herstellung von Totaldentalprothesen für Ober- und Unterkiefer.

Der Datensatz A kann beispielsweise deshalb bereits vorhanden sein, weil die provisorischen Prothesenzähne und gegebenenfalls auch die Prothesenbasis mit einem CAM-Verfahren hergestellt wurden, wobei dazu Daten verwendet wurden, die den Datensatz A enthalten oder aus denen der Datensatz A abgeleitet werden kann.

Bevorzugt wird der erste Datensatz A in Schritt a) gespeichert, nachdem die okklusalen Oberflächen der provisorischen Prothesenzähne mit einem die 3-dimensionale Oberfläche abbildenden Verfahren aufgenommen wurde und die Abbildung mit einem rechnerischen Verfahren digitalisiert wurde. Hierbei kann auch bereits eine Auswertung der Daten erfolgen und/oder eine Auswahl der Daten, um den Datensatz A zu erzeugen. Bevorzugt kann also vorgesehen sein, dass zumindest die 3-dimensionalen okklusalen Oberflächen der provisorischen Prothesenzähne der provisorischen Dentalprothese als Datensatz A bestimmt und gespeichert werden.

Der Datensatz A kann auch Daten zu der zumindest einen ersten Prothesenbasis umfassen. Bevorzugt kann vorgesehen sein, dass der Datensatz A Daten zu der 3-dimensionalen Oberfläche der provisorischen Dentalprothese enthält oder diese durch Messung und Auswertung der Messung gewonnen wurden und die so gewonnenen Daten gespeichert werden.

Bei erfindungsgemäßen Verfahren kann vorgesehen sein, dass in Schritt e) die Länge der virtuellen Modelle der endgültigen Prothesenzähne und/oder die Position und/oder die Lage der virtuellen Modelle der endgültigen Prothesenzähne in der zu erzeugenden endgültigen Dentalprothese mit Hilfe eines virtuellen Artikulators hinsichtlich der Okklusion der zu erzeugenden endgültigen Dentalprothese geprüft werden und bevorzugt die Länge der virtuellen Modelle der endgültigen Prothesenzähne und/oder die Position und/oder die Lage der virtuellen Modelle der endgültigen Prothesenzähne in der zumindest einen ersten Prothesenbasis korrigiert werden und/oder die Formen der endgültigen Prothesenzähne, insbesondere die basalen Formen der endgültigen Prothesenzähne, basierend auf der Prüfung des virtuellen Artikulators dahingehend modifiziert werden, dass eine bessere Okklusion des virtuellen Modells der endgültigen Dentalprothese im virtuellen Artikulator erreicht wird.

Hierdurch kann sichergestellt werden, dass die endgültige Dentalprothese eine hohe Qualität und Passgenauigkeit aufweist. Artikulatoren sind Geräte zur Simulation der Kiefergelenksbewegung. Virtuelle Artikulatoren führen dementsprechend eine rechnerische Simulation der Kiefergelenksbewegungen anhand eines virtuellen Modells der Dentalprothese durch. Der virtuelle Artikulator kann auch deswegen besonders nutzbringend eingesetzt werden, da die hierfür benötigten Daten ohnehin vorhanden sind oder zumindest großen Teils vorhanden sind. Dabei werden erfindungsgemäß bevorzugt nicht nur die Daten zur 3-dimensionalen okklusalen Oberfläche der Prothesenzähne verwendet sondern auch Daten zu der zumindest einen ersten Prothesenbasis. Hiermit kann die Position, Lage und Orientierung der Prothesenzähne festgelegt werden, die für die Prüfung bei der virtuellen Artikulation wesentlich ist. Eine bessere Okklusion ist für den Fachmann selbsterklärend, wobei hierzu auf einschlägige Literatur verwiesen wird.

Gemäß einer Weiterbildung des erfindungsgemäßen Verfahrens kann auch vorgesehen sein, dass in den Schritten b) und c) neben den 3-dimensionalen okklusalen Oberflächen auch die Positionen der bearbeiteten provisorischen Prothesenzähne in der ersten Prothesenbasis bestimmt und als Datensatz B2 gespeichert werden und/oder in den Schritten b) und c) neben den 3-dimensionalen okklusalen Oberflächen auch die Orientierungen der bearbeiteten provisorischen Prothesenzähne in der ersten Prothesenbasis bestimmt und als Datensatz B3 gespeichert werden und
in Schritt d) über einen rechnerischen Vergleich des Datensatzes B2 mit einem Datensatz A2, wobei in dem Datensatz A2die Positionen der unbearbeiteten provisorischen Prothesenzähne in der ersten Dentalprothese gespeichert sind, und/oder über einen rechnerischen Vergleich des Datensatzes B3 mit einem Datensatz A3, wobei in dem Datensatz A3 die Orientierungen der unbearbeiteten provisorischen Prothesenzähne in der ersten Dentalprothese gespeichert sind, werden die Unterschiede der Formen und der Positionen und/oder Orientierungen der provisorischen Prothesenzähne vor und nach der subtraktiven okklusalen Bearbeitung berechnet und daraus gewünschte Formen und Positionierungen und/oder Orientierungen für endgültige Prothesenzähne berechnet.

Hierzu können die provisorischen Prothesenzähne in beschränktem Umfang beweglich in der zumindest einen ersten Prothesenbasis gehalten sein, beispielsweise mit Hilfe einer formbaren Masse, die die provisorischen Prothesenzähne mit der zumindest einen Prothesenbasis verbinden.

Damit wird eine größere Variabilität des Verfahrens erreicht. Allerdings muss dabei zusätzlicher Aufwand betrieben werden, um die Position der Prothesenzähne relativ zur Prothesenbasis genau zu bestimmen. Hierzu können erfindungsgemäß bevorzugt Markierungen an den provisorischen Prothesenzähnen vorgesehen sein, insbesondere an den Mantelflächen der provisorischen Prothesenzähne. Neben einfachem Abschleifen der Prothesenzähne können so auch Modifikationen der Position und/oder Orientierung der provisorischen Prothesenzähne in der zumindest einen Prothesenbasis variiert und bei der Herstellung der endgültigen Dentalprothese berücksichtigt werden.

Es kann vorgesehen sein, dass die subtraktive okklusale Bearbeitung wenigstens eines der provisorischen Prothesenzähne während eines Einpassens der ersten, provisorischen Dentalprothese am Patienten erfolgt.

Hiermit wird erreicht, dass auch die Reaktion und die unmittelbare Anatomie des Patienten in Bezug auf die erste, provisorische Dentalprothese in die Herstellung der endgültigen Dentalprothese einfließt und somit ein besseres Ergebnis erzielt wird.

Bevorzugt kann des Weiteren vorgesehen sein, dass in Schritt a) der Datensatz A über ein bildgebendes Bestimmen, insbesondere über ein Einscannen mit einem Scanner, zumindest der 3-dimensionalen okklusalen Oberflächen der unbearbeiteten provisorischen Prothesenzähne der ersten Dentalprothese erzeugt wird oder über ein bildgebendes Bestimmen, insbesondere über ein Einscannen mit einem Scanner, der 3-dimensionalen Oberfläche der ersten Dentalprothese als Ganzes erzeugt wird.

Hiermit kann das gleiche Verfahren, das auch zum Erzeugen der Daten des Datensatzes B verwendet wird, auch zum Erzeugen des Datensatzes A angewendet werden und so Abweichungen beziehungsweise einige mögliche Fehlerquellen ausgeschlossen werden. Erfindungsgemäß bevorzugt werden gegebenenfalls auch die Datensätze A2 und A3 in dieser Weise erzeugt.

Mit einer erfindungsgemäßen Weiterbildung wird zudem vorgeschlagen, dass in Schritt d) neben der Berechnung der gewünschten Längen für die endgültigen Prothesenzähne auch gewünschte Formen, Orientierungen und/oder Positionierungen für die endgültigen Prothesenzähne berechnet werden.

Hiermit werden die Vorteile des erfindungsgemäßen Verfahrens auf die Formen, Orientierungen und/oder Positionierungen der endgültigen Prothesenzähne in der zumindest einen ersten Prothesenbasis oder der zumindest einen zweiten Prothesenbasis ausgeweitet.

Besonders vorteilhafte Verfahren können sich auch dadurch auszeichnen, dass zur Herstellung der ersten Dentalprothese in Schritt a) im Mundraum des Patienten aufgenommene Daten und/oder Daten zur Artikulation verwendet werden, wobei vorzugsweise die erste Dentalprothese mit einem CAD/CAM-Verfahren hergestellt wird.

Hiermit wird sichergestellt, dass die erste, provisorische Dentalprothese bereits eine sehr hohe Qualität hat, so dass nur geringfügige Änderungen, das heißt geringe subtraktive okklusale Bearbeitungen an den provisorischen Prothesenzähnen vorgenommen werden müssen. Damit wird dann erreicht, dass eine reine Modifikation der Länge der Prothesenzähne, gegebenenfalls unter Korrektur mit dem virtuellen Artikulator, ausreicht, um eine qualitativ hochwertige endgültige Dentalprothese zu erzeugen.

Auch kann vorteilhafterweise vorgesehen sein, dass die zumindest eine erste Prothesenbasis mit einem CAM-Verfahren hergestellt wird, bevorzugt aus Kunststoff gedruckt wird, besonders bevorzugt aus einem Kunststoff in Zahnfleischoptik gedruckt wird.

Dadurch kann die zumindest eine erste Prothesenbasis auch gut als endgültige Prothesenbasis verwendet werden.

Des Weiteren kann vorgesehen sein, dass die Herstellung der endgültigen Prothesenzähne mit einem 3D-Druckverfahren, durch Fräsen aus einem Block mit einem CAM-Verfahren oder durch basales Einkürzen von vorkonfektionierten Prothesenzähnen erfolgt.

Bei diesen Verfahren kann das CAM-Verfahren besonders gut umgesetzt werden. Beispielsweise kann hierfür eine computergesteuerte 4-Achs-Fräse zum Fräsen aus einem Block oder auch zum basalen Einkürzen der vorkonfektionierten Prothesenzähne verwendet werden.

Bevorzugt kann auch vorgesehen sein, dass die provisorischen Prothesenzähne mit der zumindest einen ersten Prothesenbasis lösbar verbunden sind, bevorzugt in Aufnahmevertiefungen in der zumindest einen ersten Prothesenbasis eingesteckt sind und dort in Presspassung gehalten werden.

Hiermit kann die zumindest eine erste Prothesenbasis auch gut als die zumindest eine endgültige Prothesenbasis verwendet werden, da die bearbeiteten provisorischen Prothesenzähne ohne Zerstörung der zumindest einen ersten Prothesenbasis von dieser gelöst werden können. Damit lassen sich Abweichungen zwischen der zumindest einen ersten Prothesenbasis und der zumindest einen endgültigen Prothesenbasis vermeiden.

Um ein besonders leicht durchzuführendes Verfahren mit geringer notwendiger Rechenleistung zu realisieren, kann vorgesehen sein, dass die provisorischen Prothesenzähne bezüglich ihrer Längsachse mit einer Genauigkeit von zumindest 200 µm bezüglich der zumindest einen ersten Prothesenbasis in der ersten, provisorischen Dentalprothese positioniert werden, bevorzugt mit einer Genauigkeit von zumindest 100 µm positioniert werden, besonders bevorzugt mit einer Genauigkeit von zumindest 20 µm positioniert werden.

Die Längsachse entspricht der Z-Achse der Prothesenzähne, die sich von dem basalen Ende der Prothesenzähne bis zu dem okklusalen Ende der Prothesenzähne erstreckt.

Hiermit wird auch sichergestellt, dass es zu keinen gravierenden Abweichungen zwischen der Position der provisorischen Prothesenzähne in der zumindest einen ersten Prothesenbasis und der Position der endgültigen Prothesenzähne in der zumindest einen endgültigen Prothesenbasis kommt.

Bevorzugt kann ferner vorgesehen sein, dass in Schritt a) jeder der provisorischen Prothesenzähne der ersten Dentalprothese mit einer der zumindest einen ersten Prothesenbasis verbunden wird, bevorzugt in eine der zumindest einen ersten Prothesenbasis eingesteckt wird, besonders bevorzugt in Presspassung eingesteckt wird.

Hiermit wird der genaue Aufbau der ersten, provisorischen Dentalprothese klargestellt und die Lösbarkeit der provisorischen Prothesenzähne erreicht.

Der Erfindung liegt die überraschende Erkenntnis zugrunde, dass es durch die Verwendung provisorischer Prothesenzähne in einer ersten, provisorischen Dentalprothese, die aber bereits in hoher Qualität hergestellt ist und bereits die zumindest eine endgültige Prothesenbasis enthalten kann, zusammen mit bekannten Scanverfahren und rechnergestützten CAD-Verfahren, die bei modernen Verfahren in gleicher oder ähnlicher Weise ohnehin Anwendung finden, gelingt, eine gut passende endgültige Dentalprothese herzustellen, bei der die Prothesenzähne an der okklusalen Seite nicht nachträglich bearbeitet wurden oder zumindest in geringerem Umfang okklusal nachgearbeitet werden müssen. Gleichzeitig hat die so erzeugte endgültige Dentalprothese die hohe Qualität einer durch den Zahnarzt angepassten herkömmlichen Prothese. Dies wird vor allem dadurch erreicht, dass eine okklusale Bearbeitung der provisorischen Prothesenzähne durch Vergleich der 3-dimensionalen okklusalen Oberflächen vor und nach der Bearbeitung ausgemessen wird und in eine basale Verkürzung oder basale Bearbeitung der endgültigen Prothesenzähne umgerechnet wird. Dadurch wird die erfolgte okklusale Bearbeitung der provisorischen Prothesenzähne in eine unkritische basale Bearbeitung beziehungsweise Kürzung der Prothesenzähne umgewandelt.

Nach dem vermeintlichen optimalen basalen Einkürzen der Prothesenzähne gab es bisher keine Möglichkeit, die Lage der Zähne in Z-Achse zu korrigieren, ohne die okklusalen Seiten der Prothesenzähne zu bearbeiten.

Die der vorliegenden Erfindung zugrundeliegende Idee kann dabei wie folgt aufgefasst werden. Es wird eine Prothesenbasis in rosa Ästhetik gedruckt. Diese kann schon in final erwünschter Qualität sein. Dann werden gekürzte provisorische Prothesenzähne in try-in Qualität (kostengünstig) oder auch in finaler Qualität als Prothesenzahnleiste oder auch einzeln mit der Prothesenbasis durch Presspassung oder ähnlichem verbunden. Die Passung in Z-Achse soll dabei bevorzugt möglichst genau sein, möglichst auf 200 µm genau oder besser. Die provisorische Prothesenzahnleiste oder die provisorischen Prothesenzähne können gedruckt oder auch anders gefertigt sein.

Diese erste, provisorische Dentalprothese geht in die Praxis. Dort erfolgt eine manuelle Korrektur mit einem spanenden Verfahren, wie zum Beispiel durch Schleifen, Fräsen oder ähnlichem.

Das veränderte Modell, also die veränderte erste Dentalprothese wird nun erneut gescannt. Die okklusal vorgenommene Änderung an den provisorischen Prothesenzähnen in Z-Achse wird jetzt aber bei den erneut hergestellten endgültigen Prothesenzähnen basal umgesetzt. Vorab können noch mal eine digitale Überprüfung und gegebenenfalls eine digitale Optimierung der Okklusion erfolgen, bevorzugt mit Hilfe eines virtuellen Artikulators.

Im Folgenden werden Ausführungsbeispiele der Erfindung anhand von sechs schematisch dargestellten Figuren erläutert, ohne jedoch dabei die Erfindung zu beschränken. Dabei zeigt:
- Figur 1:: eine schematische perspektivische Ansicht einer Prothesenbasis;
- Figur 2:: eine schematische perspektivische Ansicht eines Satzes provisorischer Prothesenzähne;
- Figur 3:: eine schematische Querschnittansicht einer ersten, provisorischen Dentalprothese vor der Bearbeitung;
- Figur 4:: eine schematische Querschnittansicht der ersten, provisorischen Dentalprothese nach subtraktiver okklusaler Bearbeitung;
- Figur 5:: eine schematische Darstellung einer erfindungsgemäßen Übertragung der okklusalen Höhendifferenz bearbeiteter provisorischer Prothesenzähne auf eine basale Höhendifferenz von endgültigen Prothesenzähnen; und
- Figur 6:: eine schematische Querschnittansicht einer endgültigen Dentalprothese, die mit einem erfindungsgemäßen Verfahren hergestellt wurde.

In den Figuren werden teilweise auch bei unterschiedlichen Ausführungen für gleichartige Teile und Bereiche die gleichen Bezugszeichen verwendet. Bei allen Querschnittansichten sind geschnittene Flächen schraffiert dargestellt.

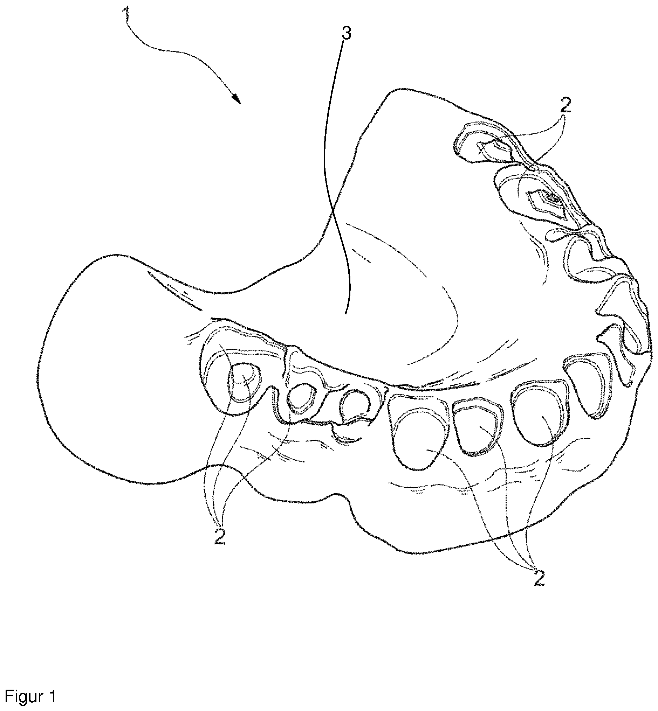

Figur 1 zeigt eine schematische perspektivische Ansicht einer Prothesenbasis 1. Die Prothesenbasis 1 besteht aus einem rosafarben eingefärbten Kunststoff. Die Färbung und Transparenz wird passend zu einer Zahnfleischoptik gewählt. In der Oberseite der Prothesenbasis 1 sind eine Vielzahl von Flächen 2 zur Fixierung von Prothesenzähnen (in Figur 1 nicht gezeigt) vorgesehen.

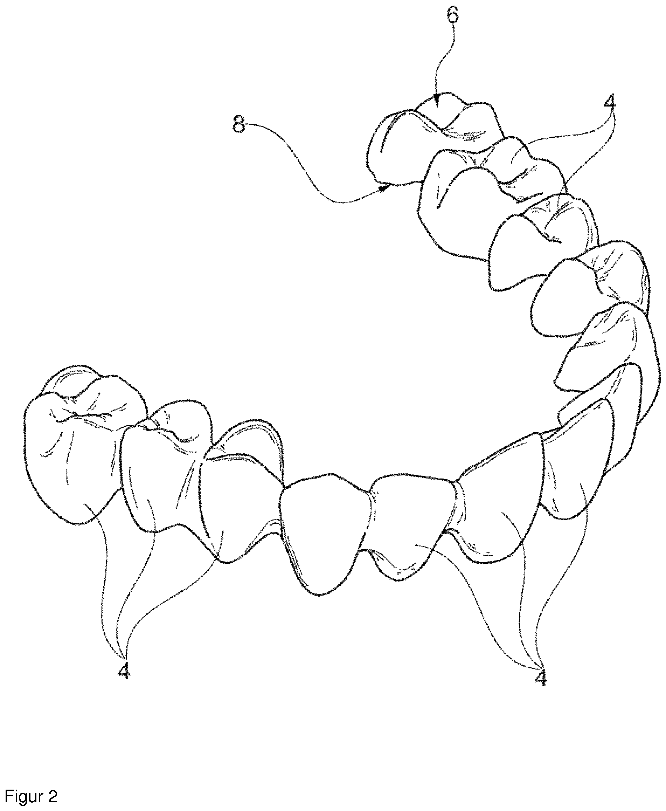

Figur 2 zeigt eine perspektivische Ansicht eines Satzes provisorischer Prothesenzähne 4 zum Durchführen eines erfindungsgemäßen Verfahrens, die zum Einsetzen in die Prothesenbasis 1 nach Figur 1 vorgesehen sind. Es sei darauf hingewiesen, dass die provisorischen Prothesenzähne 4 sowohl als zusammenhängende Zahnreihe vorliegen können, so wie dies in der Figur 2 dargestellt ist, als auch vereinzelt vorliegen können und dann nicht miteinander verbunden sind. Das Verfahren ist aber auch mit Zahnreihen von miteinander verbundenen provisorischen Prothesenzähnen 4 durchführbar, die gruppenweise miteinander verbunden sind.

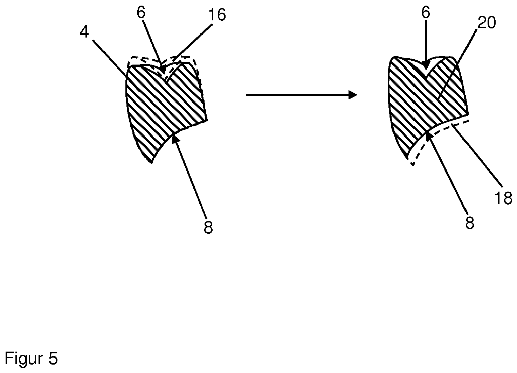

Die provisorischen Prothesenzähne 4 bestehen vorzugsweise aus einem weißen Kunststoff. Jeder provisorische Prothesenzahn 4 weist eine okklusale Oberfläche 6 (Kaufläche) und eine basale Oberfläche 8 auf. Die basale Oberfläche 8 wird in den durch die Flächen 2 gebildeten Vertiefungen in der Prothesenbasis 1 durch Presspassung lösbar fixiert. Die Flächen 2 können eine Indexierung aufweisen, so dass die provisorischen Prothesenzähne 4 nur in einer bestimmten Orientierung in der Prothesenbasis 1 einzusetzen sind und jeder provisorische Prothesenzahn 4 nur genau zu einer Fläche 2 passt. Dies ist bei der Verwendung von provisorischen Zahnreihen, insbesondere wenn die zusammenhängend als Zahnreihe ausgeführt sind, zunächst noch nicht zwingend nötig, kann aber bei der Fixierung der später vereinzelt vorliegenden endgültigen Prothesenzähne (in Figur 1 und 2 nicht dargestellt) zur Herstellung der endgültigen Dentalprothese hilfreich und vorteilhaft sein. Eine Indexierung muss gegebenenfalls später bei einer basalen Kürzung der endgültigen Prothesenzähne (siehe Figur 5) erhalten bleiben, damit die endgültigen Prothesenzähne korrekt in die Prothesenbasis 1 eingesetzt werden können.

Die Flächen 2 passen zu den basalen Gegenstücken auf der basalen Seite 8 der provisorischen Prothesenzähne 4, so dass in die durch die Flächen 2 gebildeten Vertiefungen die provisorischen Prothesenzähne 4 eingesteckt werden können und dort durch Presspassung gehalten werden.

Gemäß einer alternativen Ausgestaltung kann es auch vorgesehen sein, dass vor dem ersten Einsetzen der provisorischen Prothesenzähne 4 auf die Flächen 2 in die Prothesenbasis 1, eine dünne definierte Wachsschicht (nicht gezeigt) auf die basale Seite 8 der provisorischen Prothesenzähne 4 und/oder die Flächen 2 zur Fixierung der provisorischen Prothesenzähne 4 in der Prothesenbasis 1 aufgebracht wird. Die Wachsschicht ist dann nach dem Einsetzen der provisorischen Prothesenzähne 4 zwischen der Prothesenbasis 1 und den provisorischen Prothesenzähnen 4 angeordnet. Dadurch sind die eingesetzten provisorischen Prothesenzähne 4 in der Prothesenbasis 1 leicht beweglich und ermöglichen so dem Zahnarzt oder dem Anwender eine gewisse Korrektur der Position und Orientierung der provisorischen Prothesenzähne 4 in der Prothesenbasis 1. Dadurch können die Positionen und die Orientierungen der provisorischen Prothesenzähne 4 in der Prothesenbasis 1 an die Bedürfnisse eines Patienten angepasst werden, für den die zu erzeugende endgültige Dentalprothese bestimmt ist. Das Wachs muss vor dem Einsetzen endgültiger Prothesenzähne gegebenenfalls entfernt werden, wenn nicht eine neue Prothesenbasis mit den endgültigen Prothesenzähnen verbunden wird, um die endgültige Dentalprothese zu erhalten.

Erfindungsgemäß bevorzugt sitzen die provisorischen Prothesenzähne 4 aber in Presspassung fest in den Flächen 2 der Prothesenbasis 1 und werden nur durch Schleifen oder Fräsen auf der okklusalen Seite 6 bearbeitet. Hierdurch kann sichergestellt werden, dass die Positionen der provisorischen Prothesenzähne 4 insbesondere in Z-Achse (der Abstandsvektor zwischen dem okklusalen Ende 6 und dem basalen Ende 8 der provisorischen Prothesenzähne 4) sehr exakt eingestellt ist. Um das spätere Scanverfahren möglichst einfach zu gestalten, sollte die Position der provisorischen Prothesenzähne 4 in den Flächen 2 der Prothesenbasis 1 nämlich zumindest auf 200 µm genau sein, bevorzugt auf zumindest 100 µm genau sein. Ansonsten müssen die Positionen und Orientierungen der provisorischen Prothesenzähne 4 nämlich wiedererkannt werden, obwohl diese auf der okklusalen Seite 6 bearbeitet wurden. Hierzu können erfindungsgemäß an den Seitenflächen der provisorischen Prothesenzähne 4 Markierungen (nicht gezeigt) angeordnet sein, die eine Erkennung der Position und Orientierung der provisorischen Prothesenzähne 4 relativ zu der Prothesenbasis 1 erlaubt und dadurch zumindest vereinfacht.

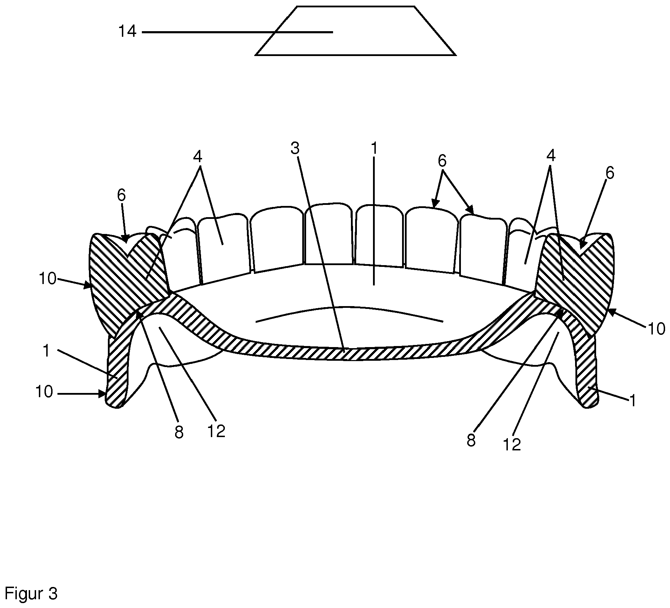

Figur 3 zeigt eine schematische Querschnittansicht einer ersten, provisorischen Dentalprothese vor der Bearbeitung. Die erste, provisorische Dentalprothese besteht aus der Prothesenbasis 1 und den in die Prothesenbasis 1 eingesteckten provisorischen Prothesenzähnen 4. An seitlichen Mantelflächen 10 der provisorischen Prothesenzähne 4 können Markierungen (nicht gezeigt) angeordnet sein, die eine Erkennung jedes provisorischen Prothesenzahns 4 sowie eine Bestimmung der Position und Orientierung der provisorischen Prothesenzähne 4 relativ zur Prothesenbasis 1 ermöglichen. Dies ist nicht notwendig, wenn die Position und Orientierung der provisorischen Prothesenzähne 4 durch eine exakte Ausführung der provisorischen Prothesenzähne 4 und der Prothesenbasis 1 sowie der Verbindung derselben festgelegt ist.

An der Unterseite der Prothesenbasis 1 befindet sich ein Bett als Auflagefläche 12 für den Kieferbogen des Patienten. Die genaue Form der Auflagefläche 12 wird bevorzugt mit Hilfe von CAD/CAM-Verfahren und einem Intraoralscan am Patienten erzeugt. Ebenso wird bevorzugt die Anordnung der Flächen 2 und die Auswahl und Form der provisorischen Prothesenzähne 4 mit einem CAD/CAM-Verfahren und einem virtuellen Artikulator berechnet und dabei sowohl die provisorischen Prothesenzähne 4 als auch die Prothesenbasis 1 mit einem CAM-Verfahren basierend auf berechneten und optimierten CAD-Modellen gefertigt.

Die 3-dimensionale Oberfläche der ersten, provisorischen Dentalprothese nach Figur 3 kann mit einem Scanner 14 in einer definierten Position der ersten Dentalprothese von der okklusalen Seite 6 her oder von mehreren Seiten eingescannt und die so gewonnenen Daten in einem elektronischen Speicher (nicht gezeigt) eines Computers (nicht gezeigt) als Datensatz A gespeichert werden. Es kann auch ausreichen, nur die okklusalen Seiten 6 der provisorischen Prothesenzähne 4 einzuscannen und als Datensatz A zu speichern oder die okklusalen Seiten 6 und die Mantelflächen 10 der provisorischen Prothesenzähne 4 und eine Stelle der Prothesenbasis 1 einzuscannen und als Datensatz A enthaltend die Datensätze A2 und A3 zu speichern. Es ist ferner auch möglich keinen Scan durchzuführen und lediglich die Informationen, die zur Herstellung der ersten, provisorischen Dentalprothese beim CAD/CAM-Verfahren genutzt wurden, zu verwenden und daraus den Datensatz A, gegebenenfalls umfassend zumindest einen der Datensätze A2 und A3, abzuleiten und zu speichern.

Die erste, provisorische Dentalprothese wird anschließend an einen Zahnarzt weitergegeben, der die erste Dentalprothese beim Patienten anpasst und dabei einige der provisorischen Prothesenzähne 4 auf der okklusalen Seite 6 abschleift oder abfräst, um die Okklusion und den Tragekomfort der ersten Dentalprothese zu erhöhen. Anschließend wird die so bearbeitete erste Dentalprothese wieder in das Labor zurückgeschickt.

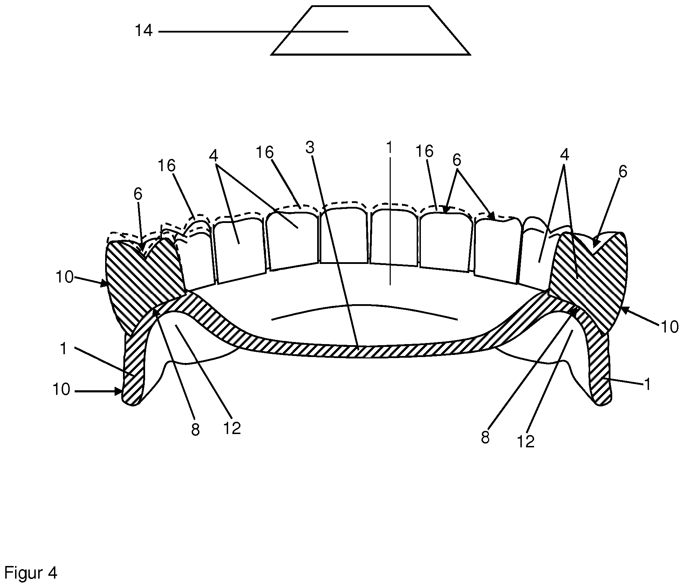

Figur 4 zeigt eine schematische Querschnittansicht der ersten, provisorischen Dentalprothese nach subtraktiver okklusaler Bearbeitung durch den Zahnarzt. Um die Bearbeitung kenntlich zu machen, ist in Figur 4 im Bereich der okklusalen Seiten 6 der bearbeiteten provisorischen Prothesenzähne 4 die Form der ursprünglichen unbearbeiteten okklusalen Seite durch eine gestrichelte Linie gekennzeichnet. In Figur 4 ist zu erkennen, dass beim vorliegenden Beispiel nicht alle provisorischen Prothesenzähne 4 okklusal bearbeitet wurden. Es können aber auch alle provisorischen Prothesenzähne 4 bearbeitet werden.

Mit Hilfe des Scanners 14 wird die 3-dimensionale Oberfläche der bearbeiteten ersten Dentalprothese aufgenommen und digitalisiert. Alternativ können auch wieder nur die okklusalen Seiten 6 der bearbeiteten provisorischen Prothesenzähne 4 oder die okklusalen Seiten 6 und die Mantelflächen 10 der bearbeiteten provisorischen Prothesenzähne 4 zusammen mit einem Punkt der Prothesenbasis 1 aufgenommen werden. Die so gewonnenen Daten werden als Datensatz B, gegebenenfalls umfassend zumindest einen der Datensätze B2 und B3, in dem elektronischen Speicher des Computers gespeichert. Anschließend erfolgt mit Hilfe des Computers ein rechnerischer Vergleich der Datensätze A und B beziehungsweise A2 und B2 und/oder A3 und B3. Daraus wird eine okklusale Höhendifferenz 16 oder ein okklusaler Differenzvolumenkörper 16 berechnet, der dem vom Zahnarzt abgetragenen Teil der provisorischen Prothesenzähne 4 entspricht.

Wie in Figur 4 zu erkennen ist, müssen dabei nicht alle provisorischen Prothesenzähne 4 bearbeitet worden sein. Bei der in Figur 4 gezeigten beispielhaften Bearbeitung wurden zwei der provisorischen Prothesenzähne 4 (in Figur auf der rechten Seite) nicht bearbeitet beziehungsweise nicht auf der okklusalen Seite 6 gekürzt. Es versteht sich, dass die Menge der abgetragenen Volumina 16 zur Verdeutlichung des erfindungsgemäßen Prinzips in Figur 4 übertrieben dargestellt ist.

Figur 5 zeigt hierzu eine schematische Darstellung einer erfindungsgemäßen Übertragung der okklusalen Höhendifferenz 16 bearbeiteter provisorischer Prothesenzähne 4 auf eine basale Höhendifferenz 18 von endgültigen Prothesenzähnen 20. Die endgültigen Prothesenzähne 20 bestehen aus einem harten weißen Kunststoff mit einer für Zähne oder zu den Zähnen eines Patienten passenden Färbung und Transparenz. Aus der okklusalen Höhendifferenz 16 oder dem okklusalen Differenzvolumenkörper 16 wird erfindungsgemäß eine basale Höhendifferenz 18 oder ein basaler Differenzvolumenkörper 18 berechnet, so dass die endgültigen Prothesenzähne 20, wenn sie in den Flächen 2 der Prothesenbasis 1 eingesetzt sind, das von der bearbeiteten ersten Dentalprothese vorgegebene okklusale Profil aufweisen, ohne dass hierfür die okklusalen Seiten 6 der endgültigen Prothesenzähne 20 bearbeitet werden mussten. Hierzu werden die basalen Seiten 8 der virtuellen CAD-Modelle für die Herstellung der endgültigen Prothesenzähne 20 basal gekürzt, wobei für die Form und den Umfang der Kürzung eine Berechnung durchgeführt wird, bei der simuliert wird, welche basale Kürzung der endgültigen Prothesenzähne 20 eine Form ergibt, die zu dem gewünschten Höhenprofil der okklusalen Seiten 6 der bearbeiteten provisorischen Prothesenzähne 4 in der Prothesenbasis 1 führt.

Die so berechneten endgültigen Prothesenzähne 20 werden mit einem CAM-Verfahren hergestellt (beispielsweise ausgedruckt) oder vorkonfektionierte Prothesenzähne (nicht gezeigt) werden mit Hilfe einer computergesteuerten 4-Achsfräse mit einem CAM-Verfahren basal entsprechend gekürzt. Veränderungen der okklusalen Seiten 6, die nicht durch eine basale Kürzung eingestellt werden können, können bei generativen Herstellungsverfahren zur Herstellung der endgültigen Prothesenzähne 20 leicht umgesetzt werden. Bei der Verwendung vor vorkonfektionierten Prothesenzähnen können entsprechend passende vorkonfektionierte Prothesenzähne ausgewählt werden.

Wenn die provisorischen Prothesenzähne 4 in der Prothesenbasis 1 beweglich angeordnet sind, können mit dem Scan die veränderte Ausrichtung (Orientierung) und Positionierung der provisorischen Prothesenzähne 4 aufgenommen und gespeichert werden. Hieraus kann dann eine geeignete basale Form der endgültigen Prothesenzähne 20 mit einem CAD-Verfahren berechnet werden und mit dem CAM-Verfahren umgesetzt werden.

Die bearbeiteten provisorischen Prothesenzähne 4 werden aus der Prothesenbasis 1 entnommen und dafür die mit dem CAM-Verfahren hergestellten beziehungsweise bearbeiteten endgültigen Prothesenzähne 20 in die Prothesenbasis 1 eingeklebt. Wenn dies gewünscht ist, kann auch eine neue Prothesenbasis 1 hergestellt werden (beispielsweise ausgedruckt werden), um so die endgültige fertige Dentalprothese mit den endgültigen Prothesenzähnen 20 herzustellen.

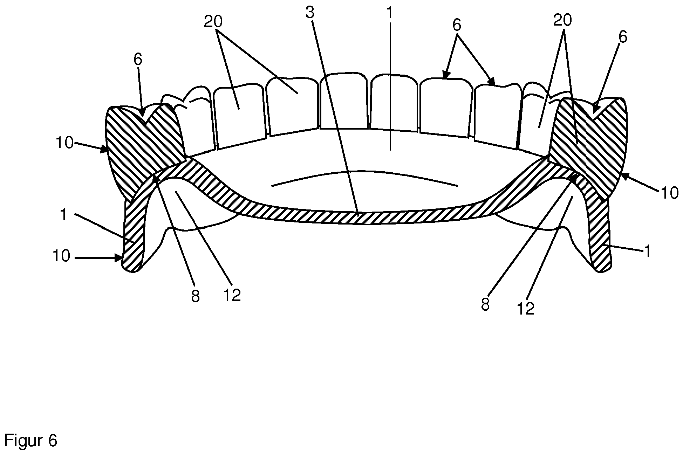

Figur 6 zeigt eine schematische Querschnittansicht einer solchen endgültigen Dentalprothese, die mit einem erfindungsgemäßen Verfahren hergestellt wurde. In die Fächer 2 der Prothesenbasis 1 wurden die endgültigen Prothesenzähne 20 mit der basalen Seite 8 der Prothesenzähne 4 eingeklebt. Die okklusalen Seiten 6 der endgültigen Prothesenzähne 20 bleiben unbearbeitet, so dass das Material auf der okklusalen Seite 6 unbeeinträchtigt ist und daher eine optimale Stabilität und Haltbarkeit aufweist. Diese mit dem erfindungsgemäßen Verfahren hergestellte endgültige Dentalprothese muss im Normalfall nicht oder nur in geringerem Umfang nachbearbeitet werden. Die Mantelflächen 10 der endgültigen Prothesenzähne 20 weisen selbstverständlich keine Markierungen auf.

Neben der gezeigten Prothesenbasis 1 kann bevorzugt bei einer vollständigen Totaldentalprothese auch eine zweite mit Prothesenzähnen 4, 20 bestückte Prothesenbasis verwendet werden. Eine Prothesenbasis ist dann für den Oberkiefer und eine andere für den Unterkiefer vorgesehen. Vorliegend wurde lediglich zur Vereinfachung der Diskussion nur von einer Prothesenbasis 1 ausgegangen, wobei für den Fachmann die Übertragung des gesagten auf eine zweite Prothesenbasis einfach und ohne weiteres möglich ist.

### Bezugszeichenliste

- 1: Prothesenbasis
- 2: Aufnahmefläche
- 3: Gaumenplatte
- 4: Provisorischer Prothesenzahn
- 6: Okklusale Oberfläche
- 8: Basale Oberfläche
- 10: Mantelfläche
- 12: Auflagefläche für Kieferbogen
- 14: Scanner
- 16: Okklusale Höhendifferenz
- 18: Basale Höhendifferenz
- 20: Endgültiger Prothesenzahn

## Patentansprüche

1. Verfahren zum Herstellen einer Dentalprothese aufweisend die folgenden chronologischen Verfahrensschritte:
a) eine erste, provisorische Dentalprothese aufweisend zumindest eine erste Prothesenbasis (1) und mehrere provisorische Prothesenzähne (4) wird hergestellt, wobei Daten, die zumindest die 3-dimensionale Form der okklusalen Oberflächen (6) der provisorischen Prothesenzähne (4) der provisorischen Dentalprothese wiedergeben, als Datensatz A gespeichert werden oder bereits als Datensatz A gespeichert sind,
b) nach einer subtraktiven okklusalen Bearbeitung wenigstens eines der provisorischen Prothesenzähne (4) werden zumindest die 3-dimensionalen okklusalen Oberflächen (6) der bearbeiteten provisorischen Prothesenzähne (4) der ersten Dentalprothese bestimmt oder die 3-dimensionale Oberfläche der ersten Dentalprothese wird als Ganzes bestimmt,
c) Daten, die zumindest die 3-dimensionale Form der okklusalen Oberflächen (6) der bearbeiteten provisorischen Prothesenzähne (4) wiedergeben, werden als Datensatz B gespeichert,
d) über einen rechnerischen Vergleich des Datensatzes B mit dem Datensatz A werden die Unterschiede der Formen der provisorischen Prothesenzähne (4) vor und nach der subtraktiven okklusalen Bearbeitung berechnet und daraus zumindest gewünschte Längen für endgültige Prothesenzähne (20) berechnet, und
e) endgültige Prothesenzähne (20) werden zumindest mit der berechneten gewünschten Länge unter Anwendung eines CAM-Verfahrens aus virtuellen Modellen der endgültigen Prothesenzähne (20) hergestellt, wobei die gewünschte Länge der endgültigen Prothesenzähne (20) durch eine basale Kürzung der virtuellen Modelle der endgültigen Prothesenzähne (20) eingestellt wird, und die derart hergestellten endgültigen Prothesenzähne (20) werden mit der zumindest einen ersten Prothesenbasis (1) oder zumindest einer zweiten Prothesenbasis fest verbunden.

2. Verfahren nach Anspruch 1, **dadurch gekennzeichnet, dass** in Schritt e) die Länge der virtuellen Modelle der endgültigen Prothesenzähne (20) und/oder die Position und/oder die Lage der virtuellen Modelle der endgültigen Prothesenzähne (20) in der zu erzeugenden endgültigen Dentalprothese mit Hilfe eines virtuellen Artikulators hinsichtlich der Okklusion der zu erzeugenden endgültigen Dentalprothese geprüft werden und bevorzugt die Länge der virtuellen Modelle der endgültigen Prothesenzähne (20) und/oder die Position und/oder die Lage der virtuellen Modelle der endgültigen Prothesenzähne (20) in der zumindest einen ersten Prothesenbasis (1) korrigiert werden und/oder die Formen der endgültigen Prothesenzähne (20), insbesondere die basalen Formen der endgültigen Prothesenzähne (20), basierend auf der Prüfung des virtuellen Artikulators dahingehend modifiziert werden, dass eine bessere Okklusion des virtuellen Modells der endgültigen Dentalprothese im virtuellen Artikulator erreicht wird.

3. Verfahren nach Anspruch 1 oder 2, **dadurch gekennzeichnet, dass**
in den Schritten b) und c) neben den 3-dimensionalen okklusalen Oberflächen (6) auch die Positionen der bearbeiteten provisorischen Prothesenzähne (4) in der ersten Prothesenbasis (1) bestimmt und als Datensatz B2 gespeichert werden und/oder in den Schritten b) und c) neben den 3-dimensionalen okklusalen Oberflächen (6) auch die Orientierungen der bearbeiteten provisorischen Prothesenzähne (4) in der ersten Prothesenbasis (1) bestimmt und als Datensatz B3 gespeichert werden und
in Schritt d) über einen rechnerischen Vergleich des Datensatzes B2 mit einem Datensatz A2, wobei in dem Datensatz A2 die Positionen der unbearbeiteten provisorischen Prothesenzähne (4) in der ersten Dentalprothese gespeichert sind, und/oder über einen rechnerischen Vergleich des Datensatzes B3 mit einem Datensatz A3, wobei in dem Datensatz A3 die Orientierungen der unbearbeiteten provisorischen Prothesenzähne (4) in der ersten Dentalprothese gespeichert sind, werden die Unterschiede der Formen und der Positionen und/oder Orientierungen der provisorischen Prothesenzähne (4) vor und nach der subtraktiven okklusalen Bearbeitung berechnet und daraus gewünschte Formen und Positionierungen und/oder Orientierungen für endgültige Prothesenzähne (20) berechnet.

4. Verfahren nach einem der vorangehenden Ansprüche, **dadurch gekennzeichnet, dass**
die subtraktive okklusale Bearbeitung wenigstens eines der provisorischen Prothesenzähne (4) während eines Einpassens der ersten, provisorischen Dentalprothese am Patienten erfolgt.

5. Verfahren nach einem der vorangehenden Ansprüche, **dadurch gekennzeichnet, dass**
in Schritt a) der Datensatz A über ein bildgebendes Bestimmen, insbesondere über ein Einscannen mit einem Scanner (14), zumindest der 3-dimensionalen okklusalen Oberflächen (6) der unbearbeiteten provisorischen Prothesenzähne (4) der ersten Dentalprothese erzeugt wird oder über ein bildgebendes Bestimmen, insbesondere über ein Einscannen mit einem Scanner (14), der 3-dimensionalen Oberfläche der ersten Dentalprothese als Ganzes erzeugt wird.

6. Verfahren nach einem der vorangehenden Ansprüche, **dadurch gekennzeichnet, dass**
in Schritt d) neben der Berechnung der gewünschten Längen für die endgültigen Prothesenzähne (20) auch gewünschte Formen, Orientierungen und/oder Positionierungen für die endgültigen Prothesenzähne (20) berechnet werden.

7. Verfahren nach einem der vorangehenden Ansprüche, **dadurch gekennzeichnet, dass**
zur Herstellung der ersten Dentalprothese in Schritt a) im Mundraum des Patienten aufgenommene Daten, an einem Modell des Mundraums aufgenommene Daten und/oder Daten zur Artikulation verwendet werden, wobei vorzugsweise die erste Dentalprothese mit einem CAD/CAM-Verfahren hergestellt wird.

8. Verfahren nach einem der vorangehenden Ansprüche, **dadurch gekennzeichnet, dass**
die zumindest eine erste Prothesenbasis (1) mit einem CAM-Verfahren hergestellt wird, bevorzugt aus Kunststoff gedruckt wird, besonders bevorzugt aus einem Kunststoff in Zahnfleischoptik gedruckt wird.

9. Verfahren nach einem der vorangehenden Ansprüche, **dadurch gekennzeichnet, dass**
die Herstellung der endgültigen Prothesenzähne (20) mit einem 3D-Druckverfahren, durch Fräsen aus einem Block mit einem CAM-Verfahren oder durch basales Einkürzen von vorkonfektionierten Prothesenzähnen erfolgt.

10. Verfahren nach einem der vorangehenden Ansprüche, **dadurch gekennzeichnet, dass**
die provisorischen Prothesenzähne (4) mit der zumindest einen ersten Prothesenbasis (1) lösbar verbunden sind, bevorzugt in Aufnahmevertiefungen (2) in der zumindest einen ersten Prothesenbasis (1) eingesteckt sind und dort in Presspassung gehalten werden.

11. Verfahren nach einem der vorangehenden Ansprüche, **dadurch gekennzeichnet, dass**
in Schritt a) jeder der provisorischen Prothesenzähne (4) der ersten Dentalprothese mit einer der zumindest einen ersten Prothesenbasis (1) verbunden wird, bevorzugt in eine der zumindest einen ersten Prothesenbasis (1) eingesteckt wird, besonders bevorzugt in Presspassung eingesteckt wird.

## Claims

1. A method for producing a dental prosthesis having the following chronological method steps:
a) a first, provisional dental prosthesis comprising at least one first prosthetic base (1) and several provisional prosthetic teeth (4) is produced, whereby data that indicate at least the 3-dimensional form of the occlusal surfaces (6) of the provisional prosthetic teeth (4) of the provisional dental prosthesis are stored as data record A or have already been stored as data record A;
b) after subtractive occlusal processing of at least one of the provisional prosthetic teeth (4), at least the 3-dimensional occlusal surfaces (6) of the processed provisional prosthetic teeth (4) of the first dental prosthesis are determined, or the 3-dimensional surface of the first dental prosthesis is determined as a whole;
c) data that indicate at least the 3-dimensional form of the occlusal surfaces (6) of the processed provisional prosthetic teeth (4) are stored as data record B;
d) via a computer comparison of data record B with data record A, the differences in the forms of the provisional prosthetic teeth (4) before and after the subtractive occlusal processing are calculated and, from this, at least desired lengths for final prosthetic teeth (20) are calculated; and
e) final prosthetic teeth (20) are produced at least with the calculated desired length using a CAM method from virtual models of the final prosthetic teeth (20), whereby the desired length of the final prosthetic teeth (20) is set by a basal shortening of the virtual models of the final prosthetic teeth (20), and the final prosthetic teeth (20), which have been produced in such a manner, are firmly connected to the at least one first prosthetic base (1) or at least one second prosthetic base.

2. The method according to claim 1, **characterized in that**
in step e) the length of the virtual models of the final prosthetic teeth (20) and/or the position and/or location of the virtual models of the final prosthetic teeth (20) are tested in the final dental prosthesis to be produced with the aid of a virtual articulator with regard to the occlusion of the final dental prosthesis to be produced, and preferably, the length of the virtual models of the final prosthetic teeth (20) and/or the position and/or the location of the virtual models of the final prosthetic teeth (20) in the at least one first prosthetic base (1) are corrected and/or the forms of the final prosthetic teeth (20), in particular the basal forms of the final prosthetic teeth (20), are modified based on the test of the virtual articulator in such a manner that an improved occlusion of the virtual model of the final dental prosthesis in the virtual articulator is achieved.

3. The method according to claim 1 or 2, **characterized in that**
in steps b) and c), alongside the 3-dimensional occlusal surfaces (6), the positions of the processed provisional prosthetic teeth (4) in the first prosthetic base (1) are determined and stored as data record B2 and/or in steps b) and c), as well as the 3-dimensional occlusal surfaces (6), the orientations of the processed provisional prosthetic teeth (4) in the first prosthetic base (1) are determined and stored as data record B3, and
in step d) using a computer comparison of the data record B2 with a data record A2, whereby in the data record A2 the positions of the non-processed provisional prosthetic teeth (4) in the first dental prosthesis are stored, and/or using a computer comparison of the data record B3 with a data record A3, whereby in the data record A3 the orientations of the non-processed provisional prosthetic teeth (4) are stored in the first dental prosthesis, the differences between the forms and the positions and/or orientations of the provisional prosthetic teeth (4) are calculated before and after the subtractive occlusal processing and, from this, desired forms and positions and/or orientations for final prosthetic teeth (20) are calculated.

4. The method according to any one of the preceding claims, **characterized in that** the subtractive occlusal processing of at least one of the provisional prosthetic teeth (4) is conducted during a fitting of the first, provisional dental prosthesis on the patient.

5. The method according to any one of the preceding claims, **characterized in that** in step a) the data record A is generated via an imaging identification, in particular via scanning in with a scanner (14), at least of the 3-dimensional occlusal surfaces (6) of the non-processed provisional prosthetic teeth (4) of the first dental prosthesis or is generated via an imaging identification, in particular via scanning in with a scanner (14), of the 3-dimensional surface of the first dental prosthesis as a whole.

6. The method according to any one of the preceding claims, **characterized in that** in step d), as well as calculating the desired lengths for the final prosthetic teeth (20), desired forms, orientations and/or positions for the final prosthetic teeth (20) are also calculated.

7. The method according to any one of the preceding claims, **characterized in that** in order to produce the first dental prosthesis in step a), data recorded in the mouth cavity of the patient, data recorded on a model of the mouth cavity and/or data relating to articulation are used, whereby preferably, the first dental prosthesis is produced with a CAD/CAM method.

8. The method according to any one of the preceding claims, **characterized in that** the at least one first prosthetic base (1) is produced with a CAM method, preferably printed from plastic, particularly preferably printed from a plastic with a gum appearance.

9. The method according to any one of the preceding claims, **characterized in that** the production of the final prosthetic teeth (20) is achieved using a 3D printing method, through milling from a block with a CAM method or through basal shortening of prefabricated prosthetic teeth.

10. The method according to any one of the preceding claims, **characterized in that** the provisional prosthetic teeth (4) are detachably connected to the at least one first prosthetic base (1), are preferably inserted into holding recesses (2) in the at least one first prosthetic base (1) and are held there in a press fit.

11. The method according to any one of the preceding claims, **characterized in that** in step a), each of the provisional prosthetic teeth (4) of the first dental prosthesis is connected to one of the at least one first prosthetic base (1), is preferably inserted into one of the at least one first prosthetic base (1) and particularly preferably is inserted in a press fit.

## Revendications

1. Procédé de fabrication d'une prothèse dentaire présentant les étapes de procédé chronologiques suivantes :
a) une première prothèse dentaire provisoire présentant au moins une première base de prothèse (1) et plusieurs dents prothétiques provisoires (4) est fabriquée, où des données, qui reproduisent au moins la forme tridimensionnelle des surfaces occlusales (6) des dents prothétiques provisoires (4) de la prothèse dentaire provisoire, sont stockées sous forme d'un ensemble de données A ou sont déjà stockées sous forme d'ensemble de données A,
b) après un usinage occlusal soustractif d'au moins une des dents prothétiques provisoires (4), on détermine au moins les surfaces occlusales (6) tridimensionnelles des dents prothétiques provisoires (4) usinées de la première prothèse dentaire ou on détermine la surface tridimensionnelle de la première prothèse dentaire dans son ensemble,
c) les données qui représentent au moins la forme tridimensionnelle des surfaces occlusales (6) des dents prothétiques provisoires (4) usinées sont stockées sous forme de l'ensemble de données B,
d) par le biais d'une comparaison par calcul de l'ensemble de données B avec l'ensemble de données A, on calcule les différences des formes des dents prothétiques provisoires (4) avant et après l'usinage occlusal soustractif et on calcule à partir de cela au moins les longueurs souhaitées pour les dents prothétiques définitives (20), et
e) les dents prothétiques définitives (20) sont fabriquées au moins avec la longueur souhaitée calculée moyennant l'emploi d'un procédé CAM à partir de modèles virtuels des dents prothétiques définitives (20), où la longueur souhaitée des dents prothétiques définitives (20) est ajustée par un raccourcissement à la base des modèles virtuels des dents prothétiques définitives (20) et les dents prothétiques définitives (20) ainsi fabriquées sont solidement reliées avec l'au moins une première base de prothèse (1) ou l'au moins une deuxième base de prothèse.

2. Procédé selon la revendication 1, **caractérisé en ce que**,
dans l'étape e), la longueur des modèles virtuels des dents prothétiques définitives (20) et/ou la position, et/ou l'emplacement des modèles virtuels des dents prothétiques définitives (20) dans la prothèse dentaire définitive à créer sont vérifiés à l'aide d'un articulateur virtuel en ce qui concerne l'occlusion de la prothèse dentaire définitive à créer et de préférence, la longueur des modèles virtuels des dents prothétiques définitives (20), et/ou la position, et/ou l'emplacement des modèles virtuels des dents prothétiques définitives (20) sont corrigés dans l'au moins une première base de prothèse (1), et/ou les formes de base des dents prothétiques définitives (20), sur la base de la vérification de l'articulateur virtuel, sont modifiées en conséquence de sorte qu'une meilleure occlusion du modèle virtuel de la prothèse dentaire définitive est réalisée dans l'articulateur virtuel.

3. Procédé selon la revendication 1 ou la revendication 2, **caractérisé en ce que**,
dans les étapes b) et c), en plus des surfaces occlusales tridimensionnelles (6), les positions des dents prothétiques provisoires (4) usinées sont également déterminées dans la première base de prothèse (1) et sont stockées sous la forme de l'ensemble de données B2, et/ou dans les étapes b) et c), en plus des surfaces occlusales tridimensionnelles (6), les orientations des dents prothétiques provisoires (4) usinées sont également déterminées dans la première base de prothèse (1) et sont stockées sous la forme de l'ensemble de données B3, et
dans l'étape d), par le biais d'une comparaison par calcul de l'ensemble de données B2 avec un ensemble de données A2, où les positions des dents prothétiques provisoires (4) non usinées dans la première prothèse dentaire sont stockées dans l'ensemble de données A2, et/ou par le biais d'une comparaison par calcul de l'ensemble de données B3 avec un ensemble de données A3, où les orientations des dents prothétiques provisoires (4) non usinées dans la première prothèse dentaire sont stockées dans l'ensemble de données A3, les différences de formes ou de positions et/ou d'orientations des dents prothétiques provisoires (4) sont calculées avant et après l'usinage occlusal soustractif et des formes et positions et/ou des orientations sont calculées à partir de celles-ci pour des dents prothétiques définitives (20).

4. Procédé selon l'une des revendications précédentes, **caractérisé en ce que**
l'usinage occlusal soustractif d'au moins une des dents prothétiques provisoires (4) a lieu pendant un ajustement de la première prothèse dentaire provisoire sur le patient.

5. Procédé selon l'une des revendications précédentes, **caractérisé en ce que**,
dans l'étape a), l'ensemble de données A est généré par le biais d'un balayage avec un scanner (14) au moins des surfaces occlusales (6) tridimensionnelles des dents prothétiques provisoires (4) non usinées de la première prothèse dentaire ou par le biais d'une détermination par imagerie, notamment par le biais d'un balayage avec un scanner (14), de la surface tridimensionnelle de la première prothèse dentaire sous forme d'un ensemble est généré.

6. Procédé selon l'une des revendications précédentes, **caractérisé en ce que**,
dans l'étape d), en plus du calcul des longueurs souhaitées pour les dents prothétiques définitives (20), les formes, les orientations et/ou les positions souhaitées pour les dents prothétiques définitives (20) sont calculées.

7. Procédé selon l'une des revendications précédentes, **caractérisé en ce que**,
pour la fabrication de la première prothèse dentaire, des données enregistrées dans l'espace buccal du patient dans l'étape a) sont employées sur un modèle de données enregistrées de l'espace buccal et/ou des données pour l'articulation, où de préférence, la première prothèse dentaire est fabriquée avec un procédé CAD/CAM.

8. Procédé selon l'une des revendications précédentes, **caractérisé en ce que**
l'au moins une première base de prothèse (1) est fabriquée avec un procédé CAM, de préférence est imprimée en matière plastique, de manière particulièrement préférée, est imprimée dans une matière plastique à l'aspect de gencive.

9. Procédé selon l'une des revendications précédentes, **caractérisé en ce que**
la fabrication des dents prothétiques définitives (20) a lieu avec un procédé d'impression en 3D, par fraisage à partir d'un bloc avec un procédé CAM ou par un raccourcissement à la base de dents prothétiques préconfectionnées.

10. Procédé selon l'une des revendications précédentes, **caractérisé en ce que**
les dents prothétiques provisoires (4) sont reliées de manière amovible avec au moins une première base de prothèse (1), de préférence, sont insérées dans des cavités de réception (2) dans l'au moins une première base de prothèse (1) et y sont maintenues dans un ajustement serré.

11. Procédé selon l'une des revendications précédentes, **caractérisé en ce que**,
dans l'étape a), chacune des dents prothétiques provisoires (4) de la première prothèse dentaire est reliée avec l'au moins une première base de prothèse (1), de préférence est insérée dans une de l'au moins une première base de prothèse (1), de manière particulièrement préférée, est insérée dans un ajustement serré.
